Europäisches Patentamt

European Patent Office

Office européen des brevets

(11) Veröffentlichungsnummer: **0 573 083 A1**

## (12) EUROPÄISCHE PATENTANMELDUNG

(21) Anmeldenummer: **93201133.1**

(22) Anmeldetag: **20.04.93**

(51) Int. Cl.5: **C22B 34/22**

(30) Priorität: **21.05.92 DE 4216798**

(43) Veröffentlichungstag der Anmeldung:
**08.12.93 Patentblatt 93/49**

(84) Benannte Vertragsstaaten:
**AT BE CH DE DK ES FR GB GR IT LI LU NL SE**

(71) Anmelder: **METALLGESELLSCHAFT Aktiengesellschaft Postfach 10 15 01, Reuterweg 14 D-60015 Frankturt(DE)**

(72) Erfinder: **Fennemann, Wolfgang Schlinkenweg 16 W-6367 Karben(DE)**

(54) **Verfahren zur Aufarbeitung von vanadiumhaltigen Rückständen.**

(57) Die Aufarbeitung von vanadiumhaltigen Rückständen erfolgt durch Laugung der Rückstände in wäßriger Aufschlämmung unter Einleitung von $SO_2$, Abtrennung des ungelösten Feststoffes und Fällung des Vanadiumgehaltes in der Lösung. Für eine einfache, wirtschaftliche und umweltschonende Aufarbeitung wird der Vanadiumgehalt aus der Sulfatlösung durch den Zusatz von Alkalihydroxid als 4-wertige Vanadiumverbindung bei einem pH von 7 bis 9 ausgefällt und aus der Alkalisulfatlösung abgetrennt.

EP 0 573 083 A1

Die Erfindung betrifft ein verfahren zur Aufarbeitung von vanadiumhaltigen Rückständen durch Laugung der Rückstände in wäßriger Aufschlämmung unter Einleitung von $SO_2$, Abtrennung des ungelösten Feststoffes und Fällung des vanadiumgehaltes in der Lösung.

Vanadium enthaltende Rückstände fallen insbesondere in Form von verbrauchten Katalysatoren, z.B. für die katalytische Umsetzung von $SO_2$ zu $SO_3$, an. Sie bestehen aus dem Trägermaterial, im allgemeinen Kieselsäure, und den katalytisch wirkenden Substanzen. Sie können neben vanadiumverbindungen noch Verbindungen anderer Metalle, wie z.B. Eisen, Arsen, Aluminium, Kalzium, Cäsium, Alkalien, enthalten. Diese Rückstände können aus Gründen der Reinhaltung der Umwelt nicht oder nur als Sondermüll deponiert werden, weil sie toxische, wasserlösliche Substanzen enthalten.

Aus diesem Grunde und zur Wiedergewinnung der Rohstoffe erfolgt in steigendem Umfang eine Aufarbeitung der Rückstände.

Aus der CS-PS 178 626 ist es bekannt, verbrauchte vanadiumhaltige Katalysatoren im Wasser unter Einleitung von $SO_2$ zu laugen. Dabei werden die Vanadiumverbindungen als $VOSO_4$ gelöst. Nach Abtrennung des Trägermaterials wird das $VOSO_4$ in der Lösung durch Zusatz von $MnO_2$ oder $NaClO_3$ Zu $VO^{5+}$ oxidiert und ein pH-Wert von 0,5 bis 5,0 eingestellt. $VO^{5+}$ wird durch ein hochmolekulares Amin in einem wasserunlöslichen Lösungsmittel extrahiert und dann durch eine alkalische Lösung reextrahiert. Anschließend wird $V_2O_5$ durch Neutralisation mit $H_2SO_4$ ausgefällt. Dieses verfahren erfordert eine Vielzahl von Verfahrensschritten und den Verbrauch relativ teurer Chemikalien, und es fällt eine große Menge an Alkalisulfat enthaltender Lösung an.

Aus der US-PS 4,913,885 ist ein Verfahren zur Aufarbeitung von vanadiumhaltigen Rohstoffen, insbesondere von verbrauchten Katalysatoren, bekannt, bei dem der Reststoff in wäßriger Suspension mit einem Gasgemisch gelaugt wird, das $SO_2$ und Sauerstoff enthält. Als besonders vorteilhaft werden konventionelle Abgase von industriellen Verbrennungsprozessen bezeichnet, die 5 bis 20% $SO_2$, 10 bis 30% $O_2$, Rest inerte Gase wie $N_2$ enthalten. Dabei gehen Vanadium als $VOSO_4$ und andere Komponenten als Sulfate in Lösung. Nach Abtrennung des Trägermaterials wird in der Lösung das $VOSO_4$ durch Zusatz von Oxidationsmitteln wie $MnO_2$, $NaClO_3$ zu $V^{5+}$ oxidiert, dann durch Zusatz von $NH_3$ in Form von $NH_4VO_3$ gefällt und nach Abtrennung zu $V_2O_5$ calciniert. Die Oxidation des $VOSO_4$ zu $V^{5+}$ erfordert den Zusatz von Oxidationsmitteln und bringt zusätzlich Metalle in Lösung; die Lösung enthält alle gelösten Metalle und zusätzlich überschüssige Ammoniumsulfate. Dadurch ist die Verwendung oder Aufarbeitung erschwert.

Der Erfindung liegt die Aufgabe zugrunde, eine Aufarbeitung der Rückstände in möglichst einfacher, wirtschaftlicher und umweltschonender Weise zu ermöglichen.

Die Lösung dieser Aufgabe erfolgt erfindungsgemäß dadurch, daß der Vanadiumgehalt aus der Sulfatlösung durch den Zusatz von Alkalihydroxid als 4-wertige Vanadiumverbindung bei einem pH von 7 bis 9 ausgefällt und aus der Alkalisulfatlösung abgetrennt wird.

Die Rückstände werden vor der Laugung je nach Zusammensetzung aufbereitet. So kann z.B. bei verbrauchten Katalysatoren eine Abtrennung von Zunder durch Magnetscheidung und eine Abtrennung von Füllkörpern durch Klassierung erfolgen. Anschließend wird der gereinigte Rückstand auf die zur Laugung erforderliche Korngröße zerkleinert. Das Vanadium liegt in den Abfällen üblicherweise in 5-wertiger Form vor. Die 5-wertigen Verbindungen sind schlecht löslich und werden deshalb in besser lösliche 4-wertige Verbindungen umgewandelt gemäß $V_2O_5 + H_2O + SO_2 = V_2O_4 + H_2SO_4$. Die Auflösung des $V_2O_4$ wird aus technischen Gründen als Sulfat durchgeführt, d.h. es ist also $H_2SO_4$ erforderlich. Die bei der Reduktion von $V^{5+}$ zu $V^{4+}$ mit $SO_2$ entstehende Schwefelsäure deckt nur die Hälfte der zur Auflösung des $V_2O_4$ gemäß $V_2O_4 + 2H_2SO_4 = 2VOSO_4 + 2H_2O$ erforderlichen stöchiometrischen Menge. Die erforderliche restliche Menge an schwefelsäure kann durch verschiedene Maßnahmen gedeckt werden, nämlich:

- durch gleichzeitige Anwendung von sauerstoffhaltigem Gas mit oder ohne Inertgas bei der $SO_2$-Laugung gemäß $SO_2 + 1/2 O_2 + H_2O = H_2SO_4$
- durch Zugabe von $O_2$-abgebenden Chemikalien bei der $SO_2$-Laugung
- durch Zugabe von $H_2SO_4$ bei der $SO_2$-Laugung
- durch Kombinationen der vorstehenden Möglichkeiten.

Der bei der Laugung zurückbleibende ungelöste Feststoff wird von der Lösung abgetrennt. Bei der Aufarbeitung von verbrauchten Katalysatoren besteht der Feststoff üblicherweise aus dem $SiO_2$-haltigen Trägermaterial. Der Feststoff wird gewaschen und kann entweder wiederverwendet oder deponiert werden. Das Waschwasser kann in die Laugung zurückgeführt werden. Das für die Fällung des Vanadiumgehaltes der Sulfatlösung zugesetzte Alkalihydroxid wird im Hinblick auf die Weiterverwertung der Alkalisulfatlösung ausgewählt. Im allgemeinen wird NaOH, KOH oder CsOH alleine oder in Mischungen verwendet. Bei dem erfindungsgemäß eingestellten pH-Wert werden mit Ausnahme der Alkalimetalle alle Metalle mindestens zum überwiegenden Teil, wie z.B. Fe, Al, Ca usw., zusammen mit dem Vanadiumgehalt ausgefällt und mit diesem von der Alkalisulfatlösung abgetrennt. Da die Fällung nahe dem Neutralpunkt erfolgt, müssen keine überschüssigen Mengen an Alkalihydroxid eingesetzt werden, sondern die erforderliche Menge an Alkalihydroxid ist in etwa stöchiometrisch dem $SO_4$-Gehalt der Sulfatlösung. Die reine Alkalisulfatlösung kann wie folgt verwendet werden:

- in der anfallenden Form
- nach Kristallisierung in fester Form
- nach fraktionierter Kristallisierung in fester und/oder flüssiger Form.

Die reine Alkalisulfatlösung kann in aufkonzentrierter Form wieder für die Herstellung von Katalysatoren verwendet werden. Eine weitere Möglichkeit nach Kristallisation ist der Einsatz als Düngemittel oder der Einsatz bei der Herstellung von Katalysatoren. Die fraktionierte Kristallisation ermöglicht die Trennung verschiedener Alkalisulfate, wobei z.B. reines oder angereichertes Cs-Sulfat gewonnen werden kann, das dann z.B. in die Katalysatorherstellung eingesetzt werden kann.

Die ausgefällten Vanadiumverbindungen werden mehrstufig im Gegenstrom gewaschen. Das abfiltrierte Hydroxid kann als wertvoller Rohstoff zur Vanadiumgewinnung eingesetzt werden.

Die Vorteile der Erfindung bestehen darin, daß durch Ausfällung als $V^{4+}$ keine Oxidationsstufe und keine oxidationsmittel erforderlich sind, und daß durch die Ausfällung aller Metalle mit Ausnahme der Alkalien eine reine Alkalisulfatlösung anfällt. Dazu ist nur ein bestimmter pH-Wert erforderlich, während bei der Ausfällung als $V_5^+$ mehrere pH-Werte für die einzelnen Metalle erforderlich sind. Als einzige Chemikalie wird Alkalihydroxid in relativ geringen Mengen zugesetzt. Es entstehen keine zu deponierenden Flüssigkeiten oder Feststoffe.

Eine vorzugsweise Ausgestaltung besteht darin, daß bei der $SO_2$-Laugung Schwefelsäure zugegeben wird. Dadurch wird der Reaktionsablauf beschleunigt, da die Schwefelsäure nicht erst gebildet werden muß, der Verbrauch an $SO_2$ ist entsprechend geringer, und es kann im geschlossenen Kreislauf ohne Abgas gearbeitet werden, wenn reines $SO_2$ eingesetzt wird. Vorzugsweise wird bei der Zugabe von Schwefelsäure mit $O_2$-freiem oder $O_2$-armen $SO_2$-Gas gearbeitet, um die Bildung von überschüssiger schwefelsäure gemäß

$$SO_2 + 1/2 \, O_2 + H_2O = H_2SO_4$$ zu verhindern. Die überschüssige Schwefelsäure würde einen entsprechend höheren Verbrauch an Neutralisationsmittel verursachen.

Eine vorzugsweise Ausgestaltung besteht darin, daß etwa 1 Mol Schwefelsäure/1 Mol $V_2O_5$ bei der Laugung zugesetzt wird. Dadurch wird eine vollständige Umsetzung erzielt, ohne daß ein höherer Neutralisationsbedarf im anschließenden Verfahren erforderlich ist.

Eine vorzugsweise Ausgestaltung besteht darin, daß das aus der Laugung austretende, überschüssiges $SO_2$ enthaltende Gas im Kreislauf wieder in die Laugung zurückgeführt wird.

Diese Arbeitsweise ist insbesondere bei reinem oder hochprozentigem $SO_2$-Gas vorteilhaft, da dann garkein Abgas oder nur eine geringe Menge Abgas anfällt.

Eine vorzugsweise Ausgestaltung besteht darin, daß aus der Sulfatlösung vor der Fällung der Vanadiumverbindungen Arsen durch Zugabe von Sulfiden ausgefällt und abgetrennt wird. Dadurch wird vermieden, daß Arsen - falls im Rückstand vorhanden - bei der Hydroxidfällung mit dem Vanadiumgehalt ausfällt und dessen Aufarbeitung erschwert. Als Sulfid wird ein Alkalisulfid verwendet, das im Hinblick auf den gewünschten Alkaligehalt der Alkalisulfatlösung ausgewählt wird.

Die Erfindung wird anhand eines Beispiels näher erläutert.

Ein verbrauchter Katalysator wurde durch folgende vorgeschaltete Maßnahmen vorbereitet:

- Sieben bei 20 mm Maschenweite zur Abtrennung keramischer Teile
- Magnetscheidung zur Abtrennung von Zunder
- Brechen auf unter 2 mm zur Herstellung eines feinkörnigen Einsatzmaterials.

In einem geschlossenen Behälter wurden 1 kg des derart vorbereiteten feinkörnigen Materials (Zusammensetzung siehe Tabelle Spalte 1) mit 2,26 kg des zweiten Waschfiltrates aus der Filtration einer vorangegangenen Charge bei 80 ° C gerührt. Die Suspension wurde mit einer vorab berechneten Menge an Schwefelsäure so angesäuert, daß sich ein Molverhältnis von $V_2O_5 : H_2SO_4 = 1:1$ einstellte.

Aus dem Gasraum des Behälters wurde mit einem Gebläse Gas angesaugt und über eine getauchte Gasverteilung in die Suspension gepreßt. Der Verbrauch an Gas wurde über Druckhaltung nachgeleitet, wobei reines $SO_2$ in einer Menge eingeleitet wurde, welche die Aufrechterhaltung eines sehr geringen Überdruckes ermöglichte. Nach zwei Stunden wurde die Laugung durch Abbrechen der $SO_2$-Einleitung beendet. Die dabei angefallene Suspension wurde über eine Kutsche heiß filtriert und zweistufig mit heißem, schwach angesäuerten Wasser nachgewaschen (1. Stufe: 1 kg Waschwasser, 2. Stufe: 2 kg Waschwasser). Das Waschfiltrat der ersten Stufe wurde mit dem Originalfiltrat zu 2,7 kg Sulfatlösung vereinigt. Das Waschfiltrat der zweiten Stufe wurde als Laugungsflüssigkeit für die nächste Charge aufbewahrt. Das abfiltrierte $SiO_2$-Produkt (1,36 kg feucht bzw. 0,6 kg trocken) stellt ein vielseitig verwendbares Produkt dar, dessen Zusammensetzung aus der Tabelle, Spalte 2 ersichtlich ist. Die Sulfatlösung wurde mit 0,05 kg Mutterlauge aus der Alkalisulfat-Kristallisation vereinigt und dieses Gemisch durch Zusatz von Kalilauge bei 60°C unter Rühren neutralisiert und ein pH-Wert von 8,0 eingestellt. Nach Zugabe eines Flockungsmittels wurde die dabei entstandene Hydroxidsuspension einer Filtration mit dreistufiger Gegenstromwäsche zugeführt

(1. Stufe: 3,3 kg zweites Waschfiltrat aus der vorangegangenen Charge,

2. Stufe: 3,3 kg drittes Waschfiltrat aus der vorangegangenen Charge,

3. Stufe: 2,83 kg Wasser). Das Originalfiltrat und das Waschfiltrat aus der ersten Stufe wurden zu 5,35 kg Alkalisulfatlösung vereinigt. Die Waschfiltrate aus der zweiten und dritten Stufe werden als Waschflüssigkeiten für die nächste Charge aufbewahrt. Das abfiltrierte Vanadiumprodukt (0,8 kg feucht bzw. 0,11 kg trocken) stellt einen wertvollen Vanadiumrohstoff dar, dessen Zusammensetzung aus der Tabelle, Spalte 3 ersichtlich ist. Die Alkalisulfatlösung wurde einer Eindampfkristallisation zugeführt. Dabei fielen an:

- 4,77 kg Kondensat (Verwendung als Waschwasser bei den beiden Filtrationsstufen der nächsten Charge)
- 0,05 kg Mutterlauge (Ausschleusung von Verunreinigungen durch Einleitung in die Neutralisationsstufe der nächsten Charge)
- 0,52 kg Alkalisulfat feucht bzw. 0,48 kg trocken, dessen Zusammensetzung aus der Tabelle, Spalte 4 ersichtlich ist.

Die beim Sieben angefallenen keramischen Teile wurden mit Wasser gewaschen. Das dabei in geringer Menge anfallende, beladene Wasser wird beim Laugungsprozeß mitverarbeitet. Die gewaschenen Teile können einer geordneten Verwertung zugeführt werden, z.B. einer Wiederverwendung als Abdeckmaterial in Katalysatorhorden oder als Rohstoff in der Keramikindustrie. Der bei der Magnetscheidung angefallene Zunder wurde ebenfalls mit Wasser gewaschen und das dabei in relativ geringer Menge angefallene, beladene Wasser wurde ebenfalls in den Laugungsprozeß geleitet. Der Zunder kann als Rohstoff zur Eisenherstellung verwendet werden. Nicht verwertbare Abfälle (Abgas, Abwasser, Feststoff) fielen nicht an.

Wenn die vorab durchgeführte Analyse ergeben hätte, daß der Katalysator durch Arsen verunreinigt ist, wäre ein Reinigungsschritt zusätzlich eingefügt worden. In diesem Falle wäre das Arsen, welches bei der Laugung überwiegend in die Sulfatlösung gelangt, aus dieser als Sulfid, z.B. durch $Na_2S$, ausgefällt worden. In einem vergleichbaren Fall, bei welchem wegen des Arsengehaltes des verbrauchten Katalysators eine Sulfatlösung mit einem Gehalt von 295 ppm $As_2O_3$ anfiel, konnte durch Zugabe der fünffachen stöchiometrischen Menge $Na_2S$ dieser Gehalt auf unter 2 ppm (Nachweisgrenze) gesenkt werden. Der dabei anfallende Arsenrückstand enthielt 11,0% Arsen und betrug ca. 28 g feucht bzw. 7 g trocken.

TABELLE   Produktzusammensetzungen in Gew.-%

| Spalte | Verbrauchter Katalysator* 1 | SiO₂-Produkt 2 | V₂O₅-Produkt 3 | Alkalisulfat 4 | As-Rückstand 5 |
|---|---|---|---|---|---|
| $V_2O_5$ | 6,4 | 0,57 | 54,5 | 0,0015 | 0,38 (V) |
| $K_2O$ | 9,1 | 0,45 | 2,1 | 48,3 | 0,71 |
| $Na_2O$ | 2,20 | 0,06 | 0,06 | 4,3 | 0,05 |
| $SiO_2$ | 57 | 95 | 0,77 | 0,015 | n.b. |
| $SO_3$ | 19,1 | 0,84 | 1,64 | 47,0 | 80 (S) |
| $Fe_2O_3$ | 4,45 | 2,02 | 28,1 | 0,003 | 1,04 |
| $Al_2O_3$ | 0,96 | 0,60 | 4,2 | < 0,002 | n.b. |
| $CaO$ | 0,36 | 0,12 | 0,54 | 0,32 | n.b. |
| $As_2O_3$ | 0,004 | 0,003 | 0,02 | < 0,0001 | 11 (As) |
| $H_2O$ | n.b. | n.b. | 7,85 | n.b. | n.b. |

* feinkörniges Einsatzgut nach Sieben, Magnetscheidung und Brechen

n.b. = nicht bestimmt

## Patentansprüche

1. Verfahren zur Aufarbeitung von vanadiumhaltigen Rückständen durch Laugung der Rückstände in wäßriger Aufschlämmung unter Einleitung von $SO_2$, Abtrennung des ungelösten Feststoffes und Fällung des Vanadiumgehaltes in der Lösung, dadurch gekennzeichnet, daß der Vanadiumgehalt aus der Sulfatlösung durch den Zusatz von Alkalihydroxid als 4-wertige Vanadiumverbindung bei einem pH von 7 bis 9 ausgefällt und aus der Alkalisulfatlösung abgetrennt wird.

2. Verfahren nach Anspruch 1, dadurch gekennzeichnet, daß bei der $SO_2$-Laugung schwefelsäure zugegeben wird.

3. Verfahren nach Anspruch 2, dadurch gekennzeichnet, daß etwa 1 Mol Schwefelsäure/1 Mol $V_2O_5$ bei der Laugung zugesetzt wird.

4. Verfahren nach einem der Ansprüche 1 bis 3, dadurch gekennzeichnet, daß das aus der Laugung austretende, überschüssiges $SO_2$ enthaltende Gas im Kreislauf wieder in die Laugung zurückgeführt wird.

5. Verfahren nach einem der Ansprüche 1 bis 3, dadurch gekennzeichnet, daß aus der Sulfatlösung vor der Fällung der Vanadiumverbindungen Arsen durch Zugabe von Sulfiden ausgefällt und abgetrennt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | US-A-4 913 885 (RHONE-POULENC CHIMIE) --- | | C22B34/22 |
| A | US-A-3 131 993 (GUSTISON ET AL.) --- | | |
| A | US-A-1 733 700 (STEVENS ET AL.) --- | | |
| A | US-A-3 840 637 (HARDWICK ET AL) --- | | |
| A | FR-A-2 288 154 (SHELL) --- | | |
| A | FR-A-2 384 854 (SHELL) ----- | | |

RECHERCHIERTE SACHGEBIETE (Int. Cl.5)

C22B

Der vorliegende Recherchenbericht wurde für alle Patentansprüche erstellt

| Recherchenort | Abschlußdatum der Recherche | Prüfer |
|---|---|---|
| DEN HAAG | 15 SEPTEMBER 1993 | MEULEMANS R.A.M. |